(19)

Europäisches
Patentamt
European
Patent Office
Office européen
des brevets

(11) **EP 3 783 127 A1**

(12) **EUROPEAN PATENT APPLICATION**
published in accordance with Art. 153(4) EPC

(43) Date of publication:
**24.02.2021 Bulletin 2021/08**

(21) Application number: **19788634.4**

(22) Date of filing: **19.04.2019**

(51) Int Cl.:
**C22C 38/00** (2006.01)          **C22C 38/60** (2006.01)
**F16C 7/02** (2006.01)

(86) International application number:
**PCT/JP2019/016832**

(87) International publication number:
**WO 2019/203348 (24.10.2019 Gazette 2019/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.04.2018 JP 2018081536**

(71) Applicant: **NIPPON STEEL CORPORATION
Chiyoda-ku
Tokyo 100-8071 (JP)**

(72) Inventors:
• **TERAMOTO Shinya**
  **Tokyo 100-8071 (JP)**
• **NEISHI Yutaka**
  **Tokyo 100-8071 (JP)**

(74) Representative: **Vossius & Partner
Patentanwälte Rechtsanwälte mbB
Siebertstrasse 3
81675 München (DE)**

(54) **STEEL, MACHINE COMPONENT, AND CONNECTING ROD**

(57)    A steel according to one aspect of the present invention has a chemical composition containing, by unit mass%, C: 0.25 to 0.55%, Si: 0.20 to 1.30%, Mn: 0.50 to 1.50%, P: 0.010 to 0.200%, S: 0.010 to 0.100%, Cr: 0 to 1.20%, V: 0.25 to 0.40%, Ti: 0.010 to 0.070%, Mo: 0 to 0.15%, N: 0.0010 to 0.0060%, Al: 0 to 0.200%, Ca: 0 to 0.005%, Zr: 0 to 0.005%, Mg: 0 to 0.005%, Bi: 0 to 0.0050%, Pb: 0 to 0.50%, Nb: 0 to 0.05%, Cu: 0 to 0.05%, and Ni: 0 to 0.05%, with the balance being Fe and impurities, wherein $0.002 < Ti - 3.4 \times N < 0.050$ is satisfied.

FIG. 1

EP 3 783 127 A1

**Description**

Technical Field

The present invention relates to a steel, a machine component and a connecting rod.

This application is based upon and claims the benefit of priority of the Japanese Patent Application No. 2018-081536 filed on April 20, 2018, the entire contents of which are incorporated herein by reference.

Background Art

For obtaining a component for an automobile engine or a component for an undercarriage, molding is performed by hot forging, and subsequently, a heat treatment for quenching and tempering is performed (hereinafter a component subjected to such a heat treatment is referred to as a heat-treated steel component) or the heat treatment is not applied (hereinafter a component not subjected to the heat treatment is referred to as a non-heat-treated steel component), so that necessary mechanical characteristics can be ensured for the resultant component. Recently, from the viewpoint of economic efficiency in production process, a component produced with thermal refining omitted, namely, a non-heat-treated steel component, is widely prevalent.

An example of the component for an automobile engine includes a connecting rod (hereinafter referred to as a con-rod). This component is a component for transmitting power in converting reciprocating motion of a piston into rotary motion by a crankshaft in an engine. A con-rod fastens a crankshaft by pinching an eccentric portion designated as a pin portion of the crankshaft between a cap portion and a rod portion of the con-rod, and transmits power by a mechanism in which the pin portion and a fastening portion of the con-rod rotatively slide on each other. In order to increase efficiency of fastening by the cap portion and the rod portion, a fracture split-type con-rod is recently employed in many cases.

A fracture split-type con-rod is obtained by employing a production method in which a steel material is molded by hot forging or the like into a shape integrally including a cap portion and a rod portion, and then a portion corresponding to a boundary between the cap portion and the rod portion is notched for fracture splitting. In employing this production method, since fractured surfaces obtained through the fracture splitting on a boundary surface between the cap portion and the rod portion are fit to each other, there is no need to machine the boundary surface, and in addition, processing performed for alignment can be omitted if necessary. In this manner, processing steps for the component can be largely reduced, and hence, economic efficiency in the production of the component is largely improved. A fracture split-type con-rod produced by this production method is required to have a brittle fraction form on fractured surfaces and have a small amount of deformation, caused through the fracture splitting, in the vicinity of the fractured surfaces, namely, have good fracture splittability.

As a steel material to be used for a fracture split-type con-rod, it is C70S6 according to DIN Standards that is prevalent in Europe and the United States, and this contains 0.7 mass% of C. In this high carbon non-heat-treated steel con-rod, a pearlite structure having low ductility and toughness is employed as the metal structure in order to restrain dimensional change caused at the time of the fracture splitting. Since C70S6 has a small amount of plastic deformation in the vicinity of fractured surfaces at the time of the fracture, it is excellent in fracture splittability, and on the other hand, as compared with a ferrite-pearlite structure of a currently used medium carbon non-heat-treated steel con-rod, the structure is coarse, and a yield ratio (= 0.2% proof stress/tensile strength) is low, and hence has a problem in that it is not applicable to a high strength con-rod required to have high buckling strength.

In order to increase the yield ratio of a steel material, it is necessary to reduce a carbon content and to increase a ferrite fraction. When the ferrite fraction is increased, however, the ductility of the steel material is improved to increase the amount of plastic deformation at the time of the fracture splitting, and shape deformation of a sliding portion of a con-rod to be fastened to a pin portion of a crankshaft is increased, which causes a problem in component performance that circularity of the sliding portion of the con-rod is deteriorated.

Several steels have been proposed as a steel material suitable for a high strength fracture split-type con-rod. For example, Patent Documents 1 and 2 describe techniques to improve fracture splittability by lowering ductility and toughness of a steel material itself by adding a large amount of an embrittlement element such as Si or P to the material. Patent Documents 3 to 5 describe techniques to improve fracture splittability of a steel material by lowering ductility and toughness of ferrite by utilizing precipitation strengthening of a second phase particle. Besides, Patent Documents 6 to 8 describe techniques to improve fracture splittability of a steel material by controlling a form of a Mn sulfide.

On the other hand, in recent years, in accordance with increase of engine power owing to spread of a high power diesel engine or turbo engine, there are increasing needs for strength increase of a con-rod. As one means for the strength increase, for example, in the techniques described in Patent Documents 1 to 7, a large amount of V is added to utilize precipitation strengthening of a steel by a fine V carbide. Among elements capable of generating alloy carbides, V is dissolved in a large solid solution amount in a steel material trough heating (at about 1250°C) performed before hot forging, and hence a large amount of precipitation strengthening can be obtained. The solid solution amount of V in a steel material is, however, limited, and further strength increase is difficult to obtain merely by increasing the content of V.

Besides, in these techniques for the strength increase, the amount of deformation of a fracture split portion is reduced, and at the same time, irregularities on fractured surfaces are reduced, and therefore, misalignment is caused when the fractured surfaces are fit to each other. For example, Patent Document 9 describes a technique to improve fittability of fractured surfaces by controlling the form of a Mn sulfide. In further strength increase, however, strength increase and fittability of fractured surfaces cannot be simultaneously attained by any of the currently employed production methods.

As described so far, a steel usable for producing a fracture split-type con-rod capable of meeting a recent request for high strength of a con-rod having all of high tensile strength and yield ratio, excellent fracture splittability, and excellent fittability of fractured surfaces cannot be obtained under actual circumstances.

Citation List

Patent Document

Patent Document 1: Japanese Patent No. 3637375
Patent Document 2: Japanese Patent No. 3756307
Patent Document 3: Japanese Patent No. 3355132
Patent Document 4: Japanese Patent No. 3988661
Patent Document 5: Japanese Patent No. 5340290
Patent Document 6: Japanese Patent No. 4314851
Patent Document 7: Japanese Patent No. 3671688
Patent Document 8: Japanese Patent No. 4268194
Patent Document 9: PCT International Publication No. WO2016/143812

Summary of Invention

Problems to be Solved by the Invention

In consideration of the actual circumstances, an object of the present invention is to provide a machine component and a connecting rod having all of high tensile strength, a high yield ratio, excellent fracture splittability and excellent fittability of fractured surfaces, and a steel from which such a machine component and a connecting rod can be produced.

Means for Solving the Problem

In order to solve the problems, the present inventors have made earnest studies on a method for realizing a steel for a high strength fracture split-type connecting rod and the component. The gist of the present invention obtained as a result is as follows:
(1) A steel according to one aspect of the present invention has a chemical composition containing, by unit mass%: C: 0.25 to 0.55%, Si: 0.20 to 1.30%, Mn: 0.50 to 1.50%, P: 0.010 to 0.200%, S: 0.010 to 0.100%, Cr: 0 to 1.20%, V: 0.25 to 0.40%, Ti: 0.010 to 0.070%, Mo: 0 to 0.15%, N: 0.0010 to 0.0060%, Al: 0 to 0.200%, Ca: 0 to 0.005%, Zr: 0 to 0.005%, Mg: 0 to 0.005%, Bi: 0 to 0.0050%, Pb: 0 to 0.50%, Nb: 0 to 0.05%, Cu: 0 to 0.05%, and Ni: 0 to 0.05%, with the balance being Fe and impurities, and a Ti content and a N content satisfy the following expression 1:

$$0.002 < \text{Ti} - 3.4 \times \text{N} < 0.050 \quad (\text{Expression 1})$$

(2) In the steel according to (1) described above, the chemical composition may contain, by unit mass%, Mo: 0.005 to 0.15%.
(3) In the steel according to (1) or (2) described above, the chemical composition may contain, by unit mass%, one or more selected from the group consisting of: Al: 0.001 to 0.200%, Ca: 0.001 to 0.005% Zr: 0.001 to 0.005%, Mg:

0.001 to 0.005%, Bi: 0.0001 to 0.0050%, Pb: 0.01 to 0.50%, Nb: 0.01 to 0.05%, Cu: 0.01 to 0.05%, and Ni: 0.01 to 0.05%.

(4) In the steel according to any one of (1) to (3) described above, the chemical composition may contain, by unit mass%, Al: 0 to 0.050%.

(5) In the steel according to any one of (1) to (4) described above, the chemical composition may contain, by unit mass%, Al: more than 0.050% and 0.200% or less.

(6) A machine component according to another aspect of the present invention comprises a steel having a chemical composition containing, by unit mass%: C: 0.25 to 0.55%, Si: 0.20 to 1.30%, Mn: 0.50 to 1.50%, P: 0.010 to 0.200%, S: 0.010 to 0.100%, Cr: 0 to 1.20%, V: 0.25 to 0.40%, Ti: 0.010 to 0.070%, Mo: 0 to 0.15%, N: 0.0010 to 0.0060%, Al: 0 to 0.200%, Ca: 0 to 0.005%, Zr: 0 to 0.005%, Mg: 0 to 0.005%, Bi: 0 to 0.0050%, Pb: 0 to 0.50%, Nb: 0 to 0.05%, Cu: 0 to 0.05%, and Ni: 0 to 0.05%, with the balance being Fe and impurities, and an area fraction of a ferrite-pearlite structure in a microstructure disposed inward from a surface by 1.0 mm or more is 95% or more, and a Ti content and a N content satisfy the following expression 2:

$$0.002 < \text{Ti} - 3.4 \times \text{N} < 0.050 \quad (\text{Expression 2})$$

(7) The machine component according to (6) described above may have a tensile strength of 1000 MPa or more and a yield ratio of 0.85 or more.

(8) A connecting rod according to another aspect of the present invention comprises a steel having a chemical composition containing, by unit mass%: C: 0.25 to 0.55%, Si: 0.20 to 1.30%, Mn: 0.50 to 1.50%, P: 0.010 to 0.200%, S: 0.010 to 0.100%, Cr: 0 to 1.20%, V: 0.25 to 0.40%, Ti: 0.010 to 0.070%, Mo: 0 to 0.15%, N: 0.0010 to 0.0060%, Al: 0 to 0.200%, Ca: 0 to 0.005%, Zr: 0 to 0.005%, Mg: 0 to 0.005%, Bi: 0 to 0.0050%, Pb: 0 to 0.50%, Nb: 0 to 0.05%, Cu: 0 to 0.05%, and Ni: 0 to 0.05%, with the balance being Fe and impurities, and an area fraction of a ferrite-pearlite structure in a microstructure disposed inward from a surface by 1.0 mm or more in a rod portion is 95% or more, and Ti content and a N content satisfy the following expression 3:

$$0.002 < \text{Ti} - 3.4 \times \text{N} < 0.050 \quad (\text{Expression 3})$$

(9) In the connecting rod according to (8) described above, the rod portion may have a tensile strength of 1000 MPa or more and a yield ratio of 0.85 or more.

Effects of the Invention

According to the present invention, a steel, a machine component and a connecting rod having all of high tensile strength, a high yield ratio, excellent fracture splittability and excellent fittability of fractured surfaces can be provided.

Brief Description of Drawings

[Figure 1] Figure 1 is a graph illustrating the relationship between a V content and a yield ratio (= 0.2% proof stress/tensile strength) in each of a steel material containing Ti and a steel material not containing Ti.
[Figure 2] Figure 2 is a graph illustrating the relationship between a Ti content and a yield ratio (= 0.2% proof stress/tensile strength) in a steel material containing 0.25% of V.
[Figure 3] Figure 3 is an exploded perspective view of a fracture split-type connecting rod described as an example of a machine component according to the present embodiment.
[Figure 4] Figure 4 is a schematic diagram of a test piece for fracture evaluation, in which Figure 4(a) is a front view thereof and Figure 4(b) is a side view thereof.
[Figure 5] Figure 5 is a schematic diagram of a testing device used for evaluating fracture splittability and fittability of fractured surfaces.

Embodiment of the Invention

The present inventors have made earnest studies on a method for realizing a machine component, a con-rod in particular, having all of high tensile strength and yield ratio, and excellent fracture splittability and fittability of fractured surfaces, resulting in obtaining the following findings (a), (b) and (c):

(a) The present inventors found that tensile strength, a yield ratio, fracture splittability and fittability of fractured surfaces of a machine component can be remarkably improved by adjusting V and N contents in a steel so as to precipitate a V carbide in pro-eutectoid ferrite in a ferrite-pearlite structure and to precipitate a V carbide also in ferrite between pearlite lamellas. As a reason why these characteristics are improved by precipitating a V carbide in pearlite, it is presumed that not only a precipitation amount of the V carbide is thus increased but also the V carbide is more finely precipitated in a larger amount between pearlite lamellas than in pro-eutectoid ferrite.

(b) The present inventors further made examination on means for precipitating an alloy carbide such as a V carbide finely and in a large amount. As a result, it was found that the tensile strength, the yield ratio, the fracture splittability and the fittability of fractured surfaces are further improved by causing a small amount of Ti to be contained in the steel in addition to V. This is probably because when a small amount of Ti is contained, a Ti carbide precipitates priorly and this Ti carbide works as a nucleus of a V carbide, and therefore, the V carbide is finely precipitated in a larger amount than in singly precipitating the V carbide.

(c) In addition, the present inventors found that fine dispersion of an alloy carbide is further accelerated when "Ti - $3.4 \times N$" calculated based on a Ti content and a N content is set in a prescribed range. "Ti - $3.4 \times N$" corresponds to an excessive Ti amount caused when all Ti and N form TiN. It is presumed that a Ti carbide formed by the excessive Ti works as a precipitation nucleus for an alloy carbide such as a V carbide so as to further accelerate fine dispersion thereof.

By the aforementioned means, steel, a machine component, and a connecting rod having all of high tensile strength, a high yield ratio, excellent fracture splittability and excellent fittability of fractured surfaces can be provided. Besides, it was also found that when Al is arbitrarily contained in the steel, more excellent fittability of fractured surfaces can be ensured with the high tensile strength, yield ratio and fracture splittability retained. This is probably because a large amount of an Al oxide works as a starting point for changing a crack propagation direction, and hence irregularities on the fractured surfaces are increased to improve the fittability between the fractured surfaces.

Now, steel, a machine component, and a connecting rod according to an embodiment of the present invention will be described. It is noted that the term "steel" used in this embodiment means a steel material that is used as a material of the machine component and the connecting rod and is subjected to hot forging. The machine component and the connecting rod can be obtained, for example, by the hot forging of the steel. The steel of the present embodiment has a concept encompassing a steel to be subjected to hot forging (namely, hot forging steel), and is, for example, a steel bar.

The steel of the present embodiment has a chemical composition containing, by unit mass%, C: 0.25 to 0.55%, Si: 0.20 to 1.30%, Mn: 0.50 to 1.50%, P: 0.010 to 0.200%, S: 0.010 to 0.100%, Cr: 0 to 1.20%, V: 0.25 to 0.40%, Ti: 0.010 to 0.070%, Mo: 0 to 0.15%, N: 0.0010 to 0.0060%, Al: 0 to 0.20%, Ca: 0 to 0.005%, Zr: 0 to 0.005%, Mg: 0 to 0.005%, Bi: 0 to 0.0050%, and Pb: 0 to 0.50%, with the balance being Fe and impurities, in which a Ti content and a N content satisfy the following expression 1:

$$0.002 < \mathrm{Ti} - 3.4 \times \mathrm{N} < 0.050 \quad (\text{Expression 1})$$

Besides, the machine component of the present embodiment is obtained by using the steel of the present embodiment as a material, includes steel having the above-described chemical composition with the balance being Fe and impurities and has an area fraction of a ferrite-pearlite structure of 95% or more in a microstructure disposed inward from the surface by 1.0 mm or more.

Besides, the machine component of the present embodiment has tensile strength, measured according to JIS Z2241 (2011) using a round bar test piece (No. 14A) obtained in parallel to a rolling direction, of preferably 1000 MPa or more, and has a yield ratio (= 0.2% proof stress/tensile strength) of preferably 0.85 or more.

Furthermore, the connecting rod of the present embodiment is obtained by using the steel of the present embodiment as a material, includes steel having the above-described chemical composition with the balance being Fe and impurities, and has, in a rod portion, an area fraction of a ferrite-pearlite structure of 95% or more in a microstructure disposed inward from the surface by 1.0 mm or more.

The connecting rod of the present embodiment has tensile strength, measured according to JIS Z2241 (2011) using a round bar test piece (No. 14A) obtained from the rod portion in parallel to the lengthwise direction, of preferably 1000 MPa or more, and has a yield ratio (= 0.2% proof stress/tensile strength) of preferably 0.85 or more.

<Chemical Composition>

Now, the chemical composition of the steel of the present embodiment and the steel of the machine component and the connecting rod will be described. It is noted that the machine component and the connecting rod may be generically designated as the "non-heat-treated steel component" in some cases in the following description. The non-heat-treated steel component refers to a hot forged product obtained by subjecting the steel of the present embodiment to hot forging or the like. Besides, in the following description, "mass%" used as the unit of a content of an alloy element will be hereinafter described as "%". In the following description, mechanical characteristics (such as tensile strength, a yield ratio, fracture splittability and fittability of fractured surfaces) are sometimes described as operational advantages of an alloy element, and these mean mechanical characteristics of the steel obtained after the hot forging (namely, of the machine component or the con-rod). Furthermore, in the following description, the description of the machine component of the present embodiment is also applicable to the con-rod of the present embodiment unless otherwise stated.

C: 0.25 to 0.55%

C has an effect of ensuring the strength of the non-heat-treated steel component. In order to obtain tensile strength necessary for the non-heat-treated steel component, it is necessary to set the lower limit of the C content to 0.25%. On the other hand, when C is excessively contained, the tensile strength is high but a yield ratio is low, and hence a secondary crack caused at the time of fracture splitting is long, and plastic deformation is caused at the tip of the secondary crack. Therefore, the fracture splittability and the fittability of fractured surfaces of the non-heat-treated steel component are conspicuously deteriorated. Accordingly, the upper limit of the C content is 0.55%. A preferable lower limit of the C content is 0.27%, 0.29%, or 0.31%. A preferable upper limit of the C content is 0.53%, 0.51%, or 0.49%.

Si: 0.20 to 1.30%

Si strengthens ferrite by solid solution strengthening, and reduces the ductility and the toughness of the non-heat-treated steel component. The reduction of the ductility and the toughness of the non-heat-treated steel component reduces the amount of the plastic deformation in the vicinity of fractured surfaces caused at the time of the fracture and improves the fracture splittability. In order to obtain this effect, it is necessary to set the lower limit of the Si content to 0.20%. On the other hand, when Si is excessively contained, the ductility and the toughness of the non-heat-treated steel are conspicuously reduced, and hence, although the fracture splittability is good, the irregularities on the fractured surfaces are so small that the fittability obtained at the time of assembly is deteriorated. Therefore, the upper limit of the Si content is 1.30%. A preferable lower limit of the Si content is 0.25%, 0.30%, or 0.35%. A preferable upper limit of the Si content is 1.25%, 1.20%, or 1.15%.

Mn: 0.50 to 1.50%

Mn is solidified with cementite in a large amount and reduces a growth rate of pearlite. The reduction of the growth rate of pearlite has an effect of improving the tensile strength and the yield ratio of the non-heat-treated steel component by precipitating an alloy carbide such as a V carbide in a large amount between pearlite lamellas. Besides, Mn binds to S to form a Mn sulfide. In the fracture splitting of the non-heat-treated steel component obtained from the steel, a crack propagates along the Mn sulfide extending in a rolling direction, and therefore, the Mn sulfide has effects of increasing the size of the irregularities on the fractured surfaces in a direction vertical to the fractured surfaces and preventing misalignment in fitting the fractured surfaces. In order to obtain these effects, it is necessary to set the lower limit of the Mn content to 0.50%. On the other hand, when Mn is excessively contained, a bainite structure is easily generated in cooling process performed after the hot forging, and hence, the tensile strength, the yield ratio and the fracture splittability of the non-heat-treated steel component are conspicuously deteriorated. Therefore, the upper limit of the Mn content is 1.50%. A preferably lower limit of the Mn content is 0.55%, 0.60%, or 0.65%. A preferable upper limit of the Mn content is 1.45%, 1.40%, or 1.35%.

P: 0.010 to 0.200%

P reduces the ductility and the toughness of ferrite and pearlite. The reduction of the ductility and the toughness has the effects of reducing the amount of plastic deformation in the vicinity of fractured surfaces caused at the time of the fracture of the non-heat-treated steel component and improving the fracture splittability. In order to obtain these effects, it is necessary to set the lower limit of the P content to 0.010%. On the other hand, when P is excessively contained, the ductility and the toughness of the non-heat-treated steel component are conspicuously reduced, and hence, although the fracture splittability is good, the irregularities on the fractured surfaces are so small that the fittability obtained at the time of the assembly is deteriorated. Therefore, the upper limit of the P content is 0.200%. A preferable lower limit of the P content is 0.015%, 0.020%, or 0.025%. A preferable upper limit of the P content is 0.180%, 0.160%, or 0.140%.

S: 0.010 to 0.100%

S binds to Mn to form a Mn sulfide. In the fracture splitting of the non-heat-treated steel component obtained from the steel, a crack propagates along the Mn sulfide extending in the rolling direction, and therefore, the Mn sulfide has effects of increasing the size of the irregularities on the fractured surfaces in the direction vertical to the fractured surfaces and preventing the misalignment in fitting the fractured surfaces. In order to obtain these effects, it is necessary to set the lower limit of the S content to 0.010%. On the other hand, when S is excessively contained, the amount of plastic deformation in the vicinity of the fractured surfaces caused at the time of the fracture of the non-heat-treated steel component is increased to deteriorate the fracture splittability. Therefore, the upper limit of the S content is 0.100%. A preferable lower limit of the S content is 0.015%, 0.020%, or 0.025%. A preferable upper limit of the S content is 0.095%, 0.090%, or 0.085%.

Cr: 0 to 1.20%

Even when Cr is not contained, the steel and the non-heat-treated steel component of the present embodiment can solve the problems, and therefore, the lower limit of the Cr content is 0%. On the other hand, Cr is solidified with cementite in a large amount and reduces the growth rate of pearlite. The reduction of the growth rate of pearlite has the effect of improving the tensile strength and the yield ratio of the non-heat-treated steel component by precipitating an alloy carbide such as a V carbide in a large amount between pearlite lamellas. In order to obtain this effect, the lower limit of the Cr content is preferably 0.05%. On the other hand, when Cr is excessively contained, a bainite structure is easily generated in cooling process performed after the hot forging, and hence, the tensile strength, the yield ratio and the fracture splittability of the non-heat-treated steel component are conspicuously deteriorated. Therefore, the upper limit of the Cr content is 1.20%. A preferable lower limit of the Cr content is 0.06%, 0.07%, or 0.08%. A preferable upper limit of the Cr content is 1.10%, 1.00%, or 0.90%.

V: 0.25 to 0.40%

Ti: 0.010 to 0.070%

V forms a carbide at the time of the cooling performed after the hot forging of the steel. When a V carbide is precipitated in a large amount in pro-eutectoid ferrite or between pearlite lamellas, the tensile strength and the yield ratio of the non-heat-treated steel component are remarkably improved, and the ductility and the toughness of these structures are conspicuously reduced. The reduction of the ductility and the toughness has the effects of reducing the amount of plastic deformation caused in the vicinity of the fractured surfaces at the time of the fracture of the non-heat-treated steel component and improving the fracture splittability.

Ti forms a nitride or a carbide. Among these, a Ti carbide precipitates, in pearlite transformation process, on an interface between pearlite and austenite priorly to a V carbide to work as a nucleus, and hence the V carbide is precipitated finely in a larger amount than when it is singly precipitated. Therefore, an effect of improving the tensile strength and the yield ratio of the non-heat-treated steel component and the fractured splittability as compared with a case where a V carbide is singly precipitated is obtained.

In order to confirm the advantages of V and Ti, the present inventors performed the following experiment. First, the present inventors produced, by continuous casting, converter-molten steels having various compositions containing C: 0.43%, Si: 0.75%, Mn: 0.90%, P: 0.055%, S: 0.025%, Cr: 0.12% and N: 0.0035% with a V content of 0.11 to 0.63% and a Ti content of 0 to 0.140%, and performed a soaking diffusion treatment and blooming process if necessary to obtain rolled materials each of 162 mm square. Thereafter, each of the steels was formed by hot rolling into a shape of a steel bar having a diameter of 56 mm.

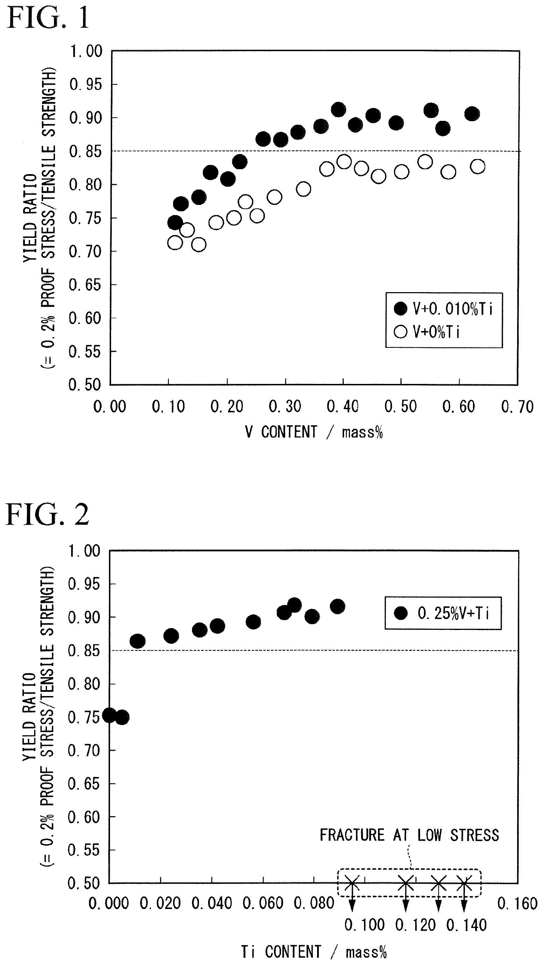

Next, in order to examine mechanical properties, a test piece corresponding to a forged connecting rod was produced by the hot forging. Specifically, the material steel bar having a diameter of 56 mm was heated to 1250°C, and the steel bar was forged in a direction perpendicular to the lengthwise direction of the steel bar to obtain a flat plate, in which a thickness of the flat plate was set to 20 mm. The thus forged material obtained after the hot forging was cooled to room temperature by natural cooling (left to stand to cool). From the forged material obtained after the cooling, a tensile test piece of JIS No. 14A and a test piece for fracture splittability evaluation in a shape corresponding to a connecting rod big end were cut out. The tensile test piece of JIS No. 14A was obtained in a position away from a side surface of the forged material by 30 mm along the lengthwise direction of the forged material. A tensile test was performed at normal temperature of 25°C at a rate of 5 mm/min according to JIS Z2241. Figure 1 illustrates the relationship between a V content and a yield ratio (= 0.2% proof stress/tensile strength) in a steel material containing 0.010% of Ti and a steel material not containing Ti. Besides, Figure 2 illustrates the relationship between the Ti content and the yield ratio (= 0.2% proof stress/tensile strength) in a steel material containing 0.25% of V. It is noted that x marks illustrated in Figure 2 indicate fracture at low stress.

Subjects of the experiment were 49 type of steels having a chemical composition containing C: 0.32%, Si: 0.68%, Mn: 0.85%, P: 0.045%, S: 0.065%, Cr: 0.20%, and N: 0.0010 to 0.0020% as a base, with V: 0.11 to 0.63% and Ti: 0 to 0.139% added thereto.

As illustrated in Figure 1, no matter whether Ti is contained or not contained, the yield ratio is increased in accordance with the increase of the V content. Besides, when Ti is contained in the steel in addition to V, the yield ratio is remarkably improved. When merely V is contained, the yield ratio is less than 0.85, and in order to obtain a higher yield ratio, it is necessary to contain both 0.25% or more of V and 0.010% or more of Ti. Accordingly, in order to obtain the yield ratio of 0.85 or more, the present inventors defined the lower limit of the V content as 0.25% and the lower limit of the Ti content as 0.010%.

On the other hand, as illustrated in Figures 1 and 2, it was revealed that when the content of V exceeds 0.40% and the content of Ti exceeds 0.070%, the yield ratio is minimally improved or the steel is fractured at low stress without plastic deformation. Accordingly, the present inventors defined the upper limit of the V content as 0.40% and the upper limit of the Ti content as 0.070%.

Based on these, in the steel and the non-heat-treated steel component of the present embodiment, the V content is 0.25 to 0.40%, and the Ti content is 0.010 to 0.070%. The lower limit of the V content may be 0.26%, 0.27%, or 0.28%. The upper limit of the V content may be 0.38%, 0.36%, or 0.34%. The lower limit of the Ti content may be 0.020% or 0.030%. The upper limit of the Ti content may be 0.060%, 0.050%, or 0.040%.

Mo: 0 to 0.15%

Mo is solidified, similarly to Mn and Cr, with cementite in a large amount and reduces the growth rate of pearlite. The reduction of the growth rate of pearlite has the effect of improving the tensile strength and the yield ratio of the non-heat-treated steel component by precipitating an alloy carbide such as a V carbide in a large amount between pearlite lamellas. In order to obtain the effect owing to Mo, Mo may be contained in an amount of 0.005% or more. Even when Mo is not contained, however, the steel and the non-heat-treated steel component of the present embodiment can solve the problems, and hence, the lower limit of the content of Mo is 0%. On the other hand, when Mo is excessively contained, a bainite structure is easily generated in cooling process performed after the hot forging, and hence, the tensile strength, the yield ratio and the fracture splittability of the non-heat-treated steel component are conspicuously deteriorated. Therefore, the upper limit of the Mo content is 0.15%. A preferable upper limit of the Mo content is 0.13%, 0.11%, or 0.09%.

N: 0.0010 to 0.0060%

N binds to Ti or V to form a nitride. The nitride restrains coarsening of an austenite structure before ferrite-pearlite transformation and deteriorates hardenability. Thus, N has an effect of restraining generation of a bainite structure that largely impairs the tensile strength, the yield ratio and the fracture splittability of the non-heat-treated steel component. In order to obtain this effect, the lower limit of the N content is 0.0010%. When N is excessively contained, the nitride is increased and a precipitation amount of an alloy carbide such as a V carbide generated at the time of the cooling performed after the hot forging is reduced, and hence, the yield ratio is lowered, and the 0.2% proof stress is also lowered. As a result, the fracture splittability of the non-heat-treated steel component is conspicuously deteriorated. Therefore, the upper limit of the N content is 0.0060%. A preferable lower limit of the N content is 0.0015%, 0.0020%, or 0.0025%. A preferable upper limit of the N content is 0.0055%, 0.0050%, or 0.0045%.

The steel and the non-heat-treated steel component of the present embodiment may further contain, as the chemical composition, one or more selected from the group consisting of Al, Ca, Zr, Mg, Bi and Pb. Even when Al, Ca, Zr, Mg, Bi and Pb are not contained, however, the steel and the non-heat-treated steel component of the present embodiment can solve the problems, and hence, the lower limit of the content of each of Al, Ca, Zr, Mg, Bi and Pb is 0%.

Al: 0 to 0.200%

The Al content can be appropriately selected from a range of 0 to 0.200%. For example, when the fracture splittability is required to be further improved, the Al content may be 0 to 0.050%, or when the fittability of fractured surfaces is required to be further improved, the Al content may be more than 0.050% and 0.200% or less.

Specifically, Al binds to oxygen to form an oxide. When an Al oxide is dispersed in a large amount in the steel, the Al oxide works as a starting point for changing a crack propagation direction, and hence irregularities on fractured surfaces are increased to further improve the fittability of the fractured surfaces. In order to obtain this effect, the lower limit of the Al content is preferably more than 0.050%. Even when the Al content is 0%, however, good fittability of the fractured surfaces can be obtained in the steel of the present embodiment after the hot forging, and hence the lower limit of the Al content may be 0%.

On the other hand, when Al is excessively contained, the material becomes brittle, and hence is chipped at the time of the fracture splitting or at the time of fitting the fractured surfaces. When the fractured surface is chipped, there arises a problem in that misalignment between fitting portions is caused on the contrary and hence the fractured surfaces cannot be accurately fit to each other. Therefore, the upper limit is 0.200%. From the viewpoint of further improving the fracture splittability, the upper limit of the Al content may be 0.050%. A preferable lower limit of the Al content is 0.001%, 0.070%, 0.090%, or 0.110%. A preferable upper limit of the Al content is 0.180%, 0.160%, 0.140%, or 0.050%.

> Ca: 0 to 0.005%
> Zr: 0 to 0.005%
> Mg: 0 to 0.005%
> Bi: 0 to 0.0050%
> Pb: 0 to 0.50%

Each of Ca, Zr and Mg binds to oxygen to be present in the steel in the form of an oxide, and thus reduces the ductility and the toughness of ferrite and pearlite. Bi is present in the form of a solid solution in the steel, and thus reduces the ductility and the toughness of ferrite and pearlite. Pb is singly present in the steel, and thus reduces the ductility and the toughness of ferrite and pearlite. The reduction of the ductility and the toughness has the effects of reducing the amount of plastic deformation in the vicinity of fractured surfaces caused at the time of the fracture of the non-heat-treated steel component and improving the fracture splittability. Accordingly, the lower limit of each of Ca, Zr and Mg may be 0.001 %. Besides, the lower limit of Bi may be 0.0001 %. The lower limit of Pb may be 0.01 %. On the other hand, when each of Ca, Zr and Mg is more than 0.005%, hot workability is deteriorated, and it is difficult to perform hot rolling. When Bi is more than 0.0050%, the hot workability is deteriorated, and it is difficult to perform hot rolling. When Pb is more than 0.50%, the hot workability is deteriorated, and it is difficult to perform hot rolling. Based on these, the upper limit of each of Ca, Zr and Mg is 0.005%, the upper limit of Bi is 0.0050%, and the upper limit of Pb is 0.50%.

Nb: 0 to 0.05%

Nb binds to C and/or N to generate and precipitate a carbide or a carbonitride, and thus, remarkably improves the tensile strength and the yield ratio of the non-heat-treated steel component, and conspicuously reduces the ductility and the toughness of these structures. The reduction of the ductility and the toughness has the effects of reducing the amount of plastic deformation caused in the vicinity of the fractured surfaces at the time of the fracture of the non-heat-treated steel component and improving the fracture splittability. When the Nb content is excessive, however, the hot workability is deteriorated to make hot rolling difficult, and hence, the upper limit is 0.05%.

Cu: 0 to 0.05%

When Cu is singly present in the steel, the ductility and the toughness of ferrite and pearlite are reduced. The reduction of the ductility and the toughness has the effects of reducing the amount of plastic deformation caused in the vicinity of the fractured surfaces at the time of the fracture of the non-heat-treated steel component and improving the fracture splittability. When the Cu content is excessive, however, the hot workability is deteriorated to make hot rolling difficult, and hence, the upper limit is 0.05%.

Ni: 0 to 0.05%

When Ni is singly present in the steel, the ductility and the toughness of ferrite and pearlite are reduced. The reduction of the ductility and the toughness has the effects of reducing the amount of plastic deformation caused in the vicinity of the fractured surfaces at the time of the fracture of the non-heat-treated steel component and improving the fracture splittability. When the Ni content is excessive, however, the hot workability is deteriorated to make hot rolling difficult, and hence, the upper limit is 0.05%.

The balance of the chemical composition of the steel and the non-heat-treated steel component of the present embodiment is iron (Fe) and impurities. The impurities mean raw materials, such as an ore and a scrap, or components mixed due to various factors occurring in production process in industrially producing the steel that are acceptable as long as the steel and the non-heat-treated steel component of the present embodiment are not harmfully affected. An example of an impurity element includes O (oxygen). When O is contained as an impurity, the content is, for example, 0.0030% or less.

In the chemical composition of the steel and the non-heat-treated steel component of the present embodiment, the Ti content and the N content satisfy the following expression 1:

$$0.002 < \text{Ti} - 3.4 \times \text{N} < 0.050 \ (\text{Expression 1})$$

The coefficient "3.4" of the term of the N content in Expression 1 corresponds to a mass number ratio between Ti and N constituting a Ti nitride. When Ti - 3.4 × N is more than 0, Ti is excessively added as compared with N, and the excessive portion of Ti forms a sulfide (such as $Ti_4C_2S_2$ or $Ti_2S$), a carbide (TiC) or the like.

In the steel and the non-heat-treated steel component of the present embodiment, a high yield ratio is ensured by generating a V carbide finely and in a large amount, and for fine dispersion of the V carbide, a Ti carbide working as a precipitation nucleus of the V carbide is necessary. Accordingly, Ti - 3.4 × N is defined as more than 0.002. On the other hand, when Ti - 3.4 × N is 0.050 or more, the amount of a Ti sulfide is excessive, and hence a Mn sulfide is reduced to impair the fittability of the fractured surfaces. Accordingly, Ti- 3.4 × N is defined as lower than 0.050. The lower limit of Ti - 3.4 × N may be 0.005, 0.010, 0.015, or 0.020. The upper limit of Ti - 3.4 × N may be 0.045, 0.040, 0.035, or 0.030.

<Microstructure of Non-heat-treated Steel Component>

Ferrite-pearlite Structure

The ferrite-pearlite structure refers to a structure principally containing ferrite-pearlite and is a structure consisting of pro-eutectoid ferrite and pearlite. Here, the structure principally containing ferrite-pearlite means that an area fraction of ferrite-pearlite in the microstructure of the non-heat-treated steel component is 95% or more, in other words, a balance structure excluding the ferrite-pearlite structure is 0 to 5%. It is to be noted that in the ferrite-pearlite structure of the non-heat-treated steel component of the present embodiment, an area fraction of pearlite is larger than an area fraction of pro-eutectoid ferrite, or the area fraction of pearlite and the area fraction of pro-eutectoid ferrite are substantially equivalent.

In a steel principally constituted by the ferrite-pearlite structure, phase interface precipitation in which an alloy carbide such as a V carbide precipitates on an interface with austenite can occur at the time of growth of pro-eutectoid ferrite or pearlite. In other words, in the cooling process performed after the hot forging, transformation from austenite to pro-eutectoid ferrite or transformation from austenite to pearlite, and precipitation of a V carbide can simultaneously occur. On the other hand, a bainite structure or martensite structure needs to be heated again, after transformation, to a temperature at which an alloy carbide such as a V carbide precipitates. Accordingly, in order to precipitate an alloy carbide such as a V carbide in a large amount in the non-heat-treated steel component, a microstructure disposed inward from the surface by 1.0 mm or more in the non-heat-treated steel component is the ferrite-pearlite structure. It is noted that a metal structure of the steel before being subjected to the hot forging is not limited. This is because the hot forging is performed at a high temperature of, for example, the Ac3 point or higher, and hence the structure of the steel before the hot forging does not affect characteristics of a steel component obtained after the hot forging.

The area fraction of the ferrite-pearlite structure contained in the microstructure disposed inward from the surface of the non-heat-treated steel component by 1.0 mm or more (hereinafter sometimes simply referred to as the "microstructure") is 95% or more, preferably 96% or more, and more preferably 97% or more. The balance structure of the non-heat-treated steel component can include a bainite structure, but when a bainite structure is generated, the yield ratio is unavoidably lowered, and hence, the balance structure of the non-heat-treated steel component is preferably as small as possible. The balance structure of the non-heat-treated steel component is 5% or less, preferably 4% or less, more preferably 3% or less, and may be 0%. In other words, the non-heat-treated steel component may include 100% of the ferrite-pearlite structure. It is to be noted that the amount of bainite in the structure of the steel before being subjected to the hot forging is not especially limited. As described above, since the hot forging is performed at a high temperature of, for example, about 1250°C, bainite contained in the steel before the hot forging disappears at the time of the hot forging and does not affect the characteristics of the machine component obtained after the hot forging.

A method for checking the microstructure of the non-heat-treated steel component is as follows. A test piece with a size of 10 mm square is cut out from the non-heat-treated steel component to observe the microstructure. The cut test piece is embedded in a resin, the resultant is mirror finished, and the thus finished surface is etched with a nital etching solution (3% nitric acid alcohol). Then, the surface etched by the etching is used as an observation surface, and arbitrary 10 positions are specified thereon to be observed with an optical microscope with an observation magnification of 400 times. In an optical micrograph, ferrite and pearlite are specified by ordinary means, and their area fractions in the photograph are measured by ordinary image analysis. Then, an average of the total area fractions of ferrite and pearlite in the 10 positions is defined as the area fraction of the ferrite-pearlite structure in the microstructure of the non-heat-treated machine component. It is to be noted that the area fraction of the ferrite-pearlite structure obtained by the above-described means is substantially the same as the volume fraction thereof.

It is to be noted that for the microstructure of the non-heat-treated steel component, a test piece is cut out, for the observation, from a position deeper from the surface by 1.0 mm or more. This is because a microstructure disposed in a region at a depth less than 1.0 mm from the surface is not especially limited as described above.

<Mechanical Characteristics of Non-heat-treated Steel Component>

Tensile Strength of 1000 MPa or more, and Yield Ratio of 0.85 or more

When the tensile strength of the non-heat-treated steel component is 1000 MPa or more, adequate strength can be ensured even when the non-heat-treated steel component is used as a connecting rod. Besides, when the yield ratio of the non-heat-treated steel component is 0.85 or more, a secondary crack caused at the time of the fracture splitting is short, plastic deformation is difficult to occur at the tip of the secondary crack, and hence the fracture splittability and the fittability of fractured surfaces are improved. Therefore, the tensile strength of the non-heat-treated steel component of the present embodiment is, for example, 1000 MPa or more and 1400 MPa or less, preferably 1050 MPa or more, and more preferably 1100 MPa or more. Besides, the yield ratio of the non-heat-treated steel component of the present embodiment is, for example, 0.85 or more, preferably 0.87 or more, and more preferably 0.90 or more. It is noted that the term yield ratio used in the present embodiment refers to a ratio between the tensile strength and the 0.2% proof stress (0.2% proof stress/tensile strength).

Besides, the non-heat-treated steel component of the present embodiment may have 0.2% proof stress of 850 MPa or more. When the 0.2% proof stress of the non-heat-treated steel component is 850 MPa or more, a secondary crack caused at the time of the fracture splitting is short, plastic deformation is difficult to occur at the tip of the secondary crack, and hence the fracture splittability and the fittability of fractured surfaces of the non-heat-treated steel component are further improved.

The tensile strength, the 0.2% proof stress and the yield ratio of the non-heat-treated steel component are measured as follows. A round bar test piece (test piece of JIS No. 14A) is cut out with the lengthwise direction of the test piece accorded with the rolling direction in the case of a machine component, and with the lengthwise direction of the test piece accorded with the lengthwise direction of a rod portion in the case of a connecting rod. The round bar test piece is cut out from an inside portion disposed at a depth of 1.0 mm or more from the surface of the machine component or the connecting rod. Besides, the test piece is cut out from the rod portion in the case of the connecting rod. Then, the test piece is used for measurement performed according to JIS Z2241 (2011). A measurement temperature is 25°C, and a strain rate is 5 mm/min.

It is noted that the mechanical characteristics of the steel before the hot forging are not especially limited. This is because, in the same manner as described for the metal structure, the mechanical characteristics of the steel before the hot forging performed by heating to a temperature of, for example, the Ac3 point or higher do not substantially affect the mechanical characteristics of the machine component obtained after the hot forging. The mechanical characteristics of the machine component obtained after the hot forging are determined depending on the chemical composition and the conditions for the hot forging. In other words, the operational advantage of the steel according to the present embodiment is that it can exhibit excellent mechanical characteristics after being subjected to the hot forging.

Although the steel of the present embodiment exhibits the excellent effects in application to the hot forging, however, the application is not limited to the hot forging. For example, when the steel of the present embodiment is cold-worked, a machine component having excellent strength, a high yield ratio, excellent fracture splittability and excellent fittability of fractured surfaces can be produced. In this case, it is useful, in the same manner as in the non-heat-treated steel component, that a structure disposed inward from the surface by 1.0 mm or more of the steel of the present embodiment is the ferrite-pearlite structure, and that the area fraction of the ferrite-pearlite structure is 95% or more. Besides, the steel of the present embodiment is, for example, a steel bar having a diameter of 20 to 80 mm, but since the application is not limited, the shape is also arbitrary.

<Production Method for Steel and Non-heat-treated Steel Component>

For the steel of the present embodiment, a billet having the above-described chemical composition is cast by continuous casting, and the resultant is formed into a rolled material through a soaking diffusion treatment and blooming process if necessary. Next, the rolled material is subjected to the hot rolling, and then the resultant is cooled to obtain the steel. The hot rolling is completed at the temperature of the Ar3 point or higher, and conditions for the cooling performed after the hot rolling need not be especially limited, and it may be left to stand to cool or water cooled. The temperature range for the hot rolling is, for example, 920°C to 980°C. After the hot rolling, there is no need to perform a thermal refining treatment such as quenching and tempering.

Besides, the non-heat-treated steel component of the present embodiment is produced by heating a steel to the temperature of the Ac3 point or higher, processing the resultant into a desired component shape by hot forging, and then cooling the resultant. Conditions for the cooling performed after the hot forging need not be especially limited as long as a ferrite-pearlite structure can be obtained, and it may be left to stand to cool or water cooled. The temperature range of a heating temperature is, for example, 1220°C to 1280°C, and a heating time is 5 min to 15 min. Besides, post processing such as cutting may be performed after the hot forging to adjust the component shape. After the hot forging, there is no need to perform a thermal refining treatment such as quenching and tempering.

The application of the steel and the non-heat-treated steel component of the present embodiment is not especially limited, and in application to a machine component used after fracture splitting, such as a fracture split-type connecting rod, particularly suitable effects can be attained.

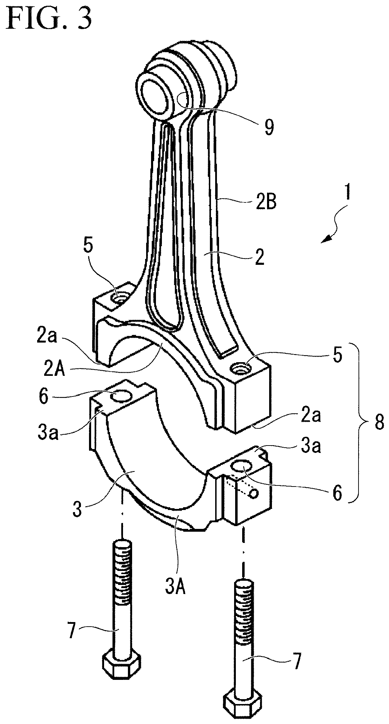

Figure 3 is an exploded perspective view of an example of the fracture split-type connecting rod (hereinafter sometimes referred to as the con-rod) of the present embodiment. The fracture split-type con-rod 1 of this example includes an upper half body 2 in the shape of a semicircular arc with a rod and a lower half body 3 in a semicircular arc shape vertically divided as illustrated in Figure 3. Screw holes 5 having thread grooves for fixation on the lower half body 3 are formed on both end sides of a semicircular arc portion 2A of the upper half body 2, and through holes 6 for fixation on the upper half body 2 are formed on both end sides of a semicircular arc portion 3A of the lower half body 3.

The semicircular arc portion 2A of the upper half body 2 and the semicircular arc portion 3A of the lower half body 3 are brought together into a circular shape, connecting bolts 7 are inserted through the through holes 6 and the screw holes 5 on the both sides of these portions to be screwed, and thus, a ring-shaped big end part 8 is constructed. On an upper end side of a rod portion 2B of the upper half body 2, a ring-shaped small end part 9 is formed.

The fracture split-type con-rod 1 having the structure illustrated in Figure 3 is incorporated into an internal combustion engine such as an automobile engine for converting reciprocating motion of a piston of the internal combustion engine into rotary motion, the small end part 9 is connected to a piston not shown, and the big end part 8 is connected to a connecting rod journal (not shown) of the internal combustion engine.

The fracture split-type con-rod 1 of the present embodiment is made of the steel having the above-described chemical composition and microstructure, and the semicircular arc portion 2A of the upper half body 2 and the semicircular arc portion 3A of the lower half body 3 are formed by brittle fracture of a portion that has originally been formed as one circular component. For example, a hot forged product is provided with a notch in a part thereof to be used as a starting point for the brittle fracture splitting, and thus, an abutting surface 2a of the semicircular arc portion 2A of the upper half body 2 and an abutting surface 3a of the semicircular arc portion 3A of the lower half body 3 are formed. These abutting surfaces 2a and 3a are formed by the fracture splitting of the originally single member, and hence can be abutted against each other with high alignment accuracy.

In the fracture split-type con-rod 1 having this structure, there is no need to perform new processing on the abutting surfaces or to provide a positioning pin, and hence, the production process can be largely simplified.

For example, the fracture split-type con-rod 1 comprises a steel containing, in mass%, C: 0.25 to 0.55%, Si: 0.20 to 1.30%, Mn: 0.50 to 1.50%, P: 0.010 to 0.200%, S: 0.010 to 0.100%, Cr: 0 to 1.20%, V: 0.25 to 0.40%, Ti: 0.010 to 0.070%, Mo: 0 to 0.15%, N: 0.0010 to 0.0060%, Al: 0 to 0.20%, Ca: 0 to 0.005%, Zr: 0 to 0.005%, Mg: 0 to 0.005%, Bi: 0 to 0.0050%, and Pb: 0 to 0.50%, with the balance being Fe and impurities, has, in a rod portion, an area fraction of a ferrite-pearlite structure of 95% or more in a microstructure disposed inward from the surface by 1.0 mm or more, and has a Ti content and a N content satisfying the following expression 3:

$$0.002 < \text{Ti} - 3.4 \times \text{N} < 0.050 \quad \text{(Expression 3)}$$

When the steel having the aforementioned composition is hot forged and then cooled into a steel, a con-rod having the target characteristics described above can be obtained. Methods for measuring the area fraction of the ferrite-pearlite structure and the various mechanical characteristics of the con-rod are the same as the measurement methods for these of the machine component described above.

EXAMPLES

The present invention will now be described in detail by way of examples. It is noted that these examples are illustrative of the technical meaning and advantages of the present invention, and hence are not intended to limit the scope of the present invention.

Converter-molten steels respectively having compositions shown in Table 1-1 and Table 1-2 described below were produced by continuous casting, and were formed into rolled materials of 162 mm square through a soaking diffusion treatment and blooming process if necessary. Next, each of the rolled materials was heated to 950°C, and then the steel was formed by the hot rolling into a shape of a steel bar having a diameter of 56 mm. In Table 1-1 and Table 1-2, an underlined value indicates that the value is out of a range of the present invention. Besides, a sign "-" shown in Table 1-1 and Table 1-2 indicates that an element corresponding to the sign is not added.

Next, in order to examine the microstructure and the mechanical characteristics, a test piece corresponding to a con-rod was produced by the hot forging. Specifically, the material steel bar having a diameter of 56 mm was heated to 1250°C and kept for 5 minutes, and the resultant steel bar was forged at 1200°C vertically to the lengthwise direction of the steel bar to obtain a flat plate having a thickness of 20 mm. The thus forged material (flat plate) obtained after the hot forging was cooled to room temperature by natural cooling (left to stand to cool).

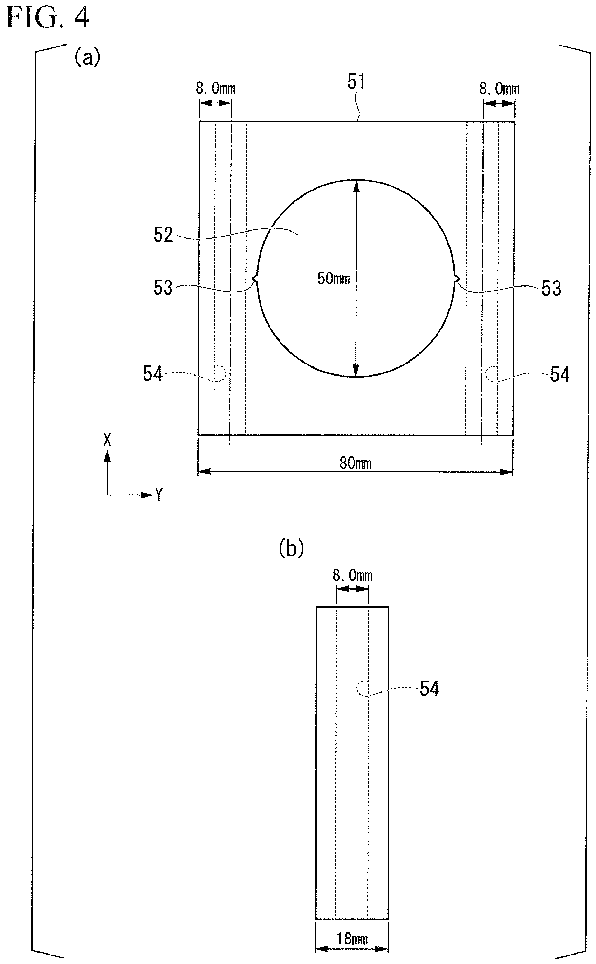

Next, from the forged material obtained after the cooling, a tensile test piece of JIS No. 14A and a test piece for fracture evaluation in a shape corresponding to a con-rod big end were produced by cutting. The tensile test piece of JIS No. 14A was obtained in a position away from a side surface of the forged material by 30 mm along the lengthwise direction of the forged material. Besides, the test piece 51 for fracture evaluation was, as illustrated in Figure 4, in the shape of a plate of 80 mm x 80 mm with a thickness of 18 mm having a hole 52 with a diameter of 50 mm formed at the center. Besides, on an inner surface of the hole 52 with a diameter of 50 mm, V notches 53 of 45° having a depth of 1 mm and a tip curvature of 0.5 mm were provided in two positions at ±90 degrees against the lengthwise direction of the steel bar used as the material before the forging. Furthermore, through holes 54 having a diameter of 8 mm were formed as bolt holes in such positions that the center line thereof is away from the notched side surfaces by 8 mm. An X direction and a Y direction illustrated with arrows in Figure 4 will be described later.

The tensile test was performed at 25°C and a strain rate of 5 mm/min according to JIS Z2241. A test piece having tensile strength less than 1000 MPa, or having a yield ratio (= 0.2% proof stress/tensile strength) less than 0.85 when rounded to three decimal places was determined to be poor in the strength.

Besides, from the same portion as the tensile test piece, two samples each of 10 mm square were cut (from a position at a depth of 1.0 mm from the surface, however) to observe a microstructure. Each of the cut samples was embedded in a resin, the resultant was mirror finished, and the resultant surface was etched with a nital etching solution (3% nitric acid alcohol). Then, the finished surface etched by the etching was used as an observation surface to be observed with an observation magnification of 400 times using an optical microscope, and photographic images in arbitrary 10 visual fields were obtained. Since phases of ferrite, pearlite and bainite are different from one another in contrast, the respective phases were specified based on their contrasts in the structure observation to obtain their area fractions. Here, a balance structure excluding ferrite-pearlite is defined as bainite. Although bainite includes martensite, it is difficult to distinguish these from each other, and hence both are herein generically designated as bainite. Accordingly, in each visual field, a region corresponding to neither ferrite nor pearlite was specified as bainite. Then, an average of total area fractions of ferrite and pearlite in the obtained ten positions was defined as the area fraction of the ferrite-pearlite structure of the microstructure. In Table 2-1 and Table 2-2, for a sample in which the microstructure consisted of substantially ferrite and perlite alone, namely, a total area fraction of ferrite and perlite was 100%, "F/P" was described in a column of "Microstructure". Besides, for a sample containing a structure in addition to ferrite and pearlite, a sign "B", which indicates a balance structure excluding ferrite-pearlite, was described in the column of "Microstructure".

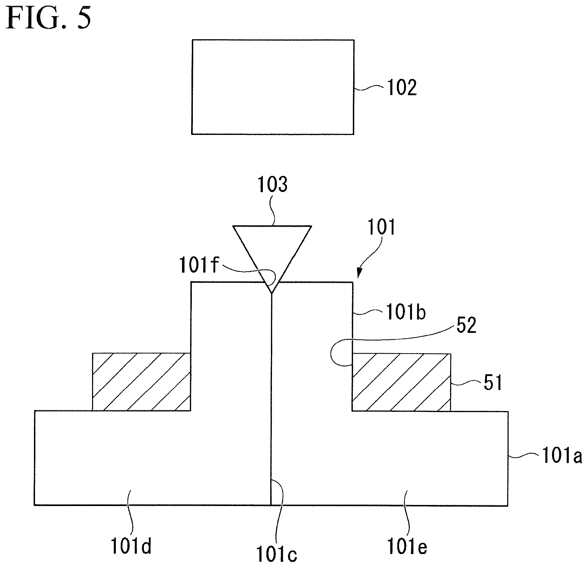

The fracture splittability and the fittability of fractured surfaces were evaluated using a testing device illustrated in Figure 5. The testing device of Figure 5 includes a split mold 101 and a drop weight tester. The split mold 101 includes a cylindrical portion 101b having a diameter of 46.5 mm formed on a rectangular steel material 101 a and is in a shape halved along a center line 101c. One half split mold 101d is fixed, and another half split mold 101e is movable in the horizontal direction in the drawing on a rail not shown. On an upper surface of the cylindrical portion 101b, a wedge hole 1O1f is formed, and the wedge hole 101f communicates with the split surface 101c of the split mold 101.

At the time of a fracture test, the hole 52 having a diameter of 50 mm of the test piece 51 for fracture evaluation illustrated in Figure 4 is fit around the cylindrical portion 101b having a diameter of 46.5 mm of the split mold 101, a wedge 103 is put in the wedge hole 101f, and the resultant is set below a drop weight 102. The drop weight 102 has a mass of 200 kg and has a mechanism to drop along a guide. When the drop weight 102 is dropped, the wedge 103 is driven to separate the split molds 101d and 101e from each other, and the test piece 51 for fracture evaluation is tensile fractured into two from starting points of the V notches 53. It is to be noted that the test piece 51 for fracture evaluation is circumferentially fixed to be pressed against the split mold 101 so as not to allow the test piece 51 to move away from the split mold at the time of fracture.

In order to evaluate the fracture splittability and the fittability of fractured surfaces of the steel, an amount of fractured surface deformation in the X direction and an amount of fractured surface deformation in the Y direction, obtained after the fracture, of the test piece for fracture evaluation were measured. The fractured surfaces obtained after the fracture splitting were abutted against each other and fastened with a bolt, and with a direction vertical to the fracture direction defined as the X direction (X direction of Figure 4) and with the fracture direction defined as the Y direction (Y direction of Figure 4), an inner diameter was measured, and a difference between the inner diameter obtained before the fracture splitting and the inner diameter obtained after the fracture splitting was defined as the amount of deformation.

A sample in which at least one of the amount of fractured surface deformation in the X direction and the amount of fractured surface deformation in the Y direction is 80 $\mu$m or more was regarded to be poor in the fracture splittability and the fittability of fractured surfaces. Besides, in a sample in which the amount of fractured surface deformation in the X direction was 10 $\mu$m or less (including a negative value), misalignment in the Y direction was caused in abutting the fractured surfaces, and hence the fittability of fractured surfaces was regarded to be poor in this case.

[Table 1-1]

EP 3 783 127 A1

| Test No. | Type | Chemical composition (mass%) Balance: Fe and impurities | | | | | | | | | | | | | | | | | Ti-3.4N |
|---|---|---|---|---|---|---|---|---|---|---|---|---|---|---|---|---|---|---|---|
| | | C | Si | Mn | P | S | Cr | V | Ti | Mo | N | Al | Ca | Zr | Mg | Bi | Pb | Others | |
| A1 | Inventive Examples | 0.25 | 0.71 | 0.74 | 0.053 | 0.051 | 0.21 | 0.35 | 0.032 | — | 0.0046 | — | — | — | — | — | — | | 0.016 |
| A2 | | 0.55 | 0.68 | 0.78 | 0.042 | 0.058 | 0.18 | 0.34 | 0.031 | — | 0.0041 | — | — | — | — | — | — | | 0.017 |
| A3 | | 0.38 | 0.21 | 0.69 | 0.049 | 0.043 | 0.14 | 0.32 | 0.030 | — | 0.0048 | — | — | — | — | — | — | | 0.014 |
| A4 | | 0.37 | 1.28 | 0.82 | 0.062 | 0.067 | 0.28 | 0.30 | 0.042 | — | 0.0045 | — | — | — | — | — | — | | 0.027 |
| A5 | | 0.37 | 0.78 | 0.52 | 0.054 | 0.060 | 0.23 | 0.31 | 0.038 | — | 0.0044 | — | — | — | — | — | — | | 0.023 |
| A6 | | 0.34 | 0.62 | 1.47 | 0.038 | 0.055 | 0.24 | 0.32 | 0.040 | — | 0.0052 | — | — | — | — | — | — | | 0.022 |
| A7 | | 0.41 | 0.73 | 0.62 | 0.012 | 0.064 | 0.16 | 0.31 | 0.043 | — | 0.0043 | — | — | — | — | — | — | | 0.028 |
| A8 | | 0.37 | 0.67 | 0.68 | 0.197 | 0.050 | 0.15 | 0.33 | 0.036 | — | 0.0037 | — | — | — | — | — | — | | 0.023 |
| A9 | | 0.42 | 0.77 | 0.78 | 0.064 | 0.013 | 0.22 | 0.31 | 0.036 | — | 0.0042 | — | — | — | — | — | — | | 0.022 |
| A10 | | 0.38 | 0.64 | 0.89 | 0.057 | 0.099 | 0.21 | 0.30 | 0.038 | — | 0.0044 | — | — | — | — | — | — | | 0.023 |
| A11 | | 0.38 | 0.65 | 0.81 | 0.048 | 0.046 | 0.05 | 0.34 | 0.041 | — | 0.0047 | — | — | — | — | — | — | | 0.025 |
| A12 | | 0.37 | 0.69 | 0.74 | 0.062 | 0.041 | 1.18 | 0.33 | 0.033 | — | 0.0050 | — | — | — | — | — | — | | 0.016 |
| A13 | | 0.35 | 0.72 | 0.62 | 0.057 | 0.058 | 0.27 | 0.25 | 0.036 | — | 0.0041 | — | — | — | — | — | — | | 0.022 |
| A14 | | 0.36 | 0.70 | 0.65 | 0.052 | 0.061 | 0.24 | 0.40 | 0.048 | — | 0.0042 | — | — | — | — | — | — | | 0.034 |
| A15 | | 0.41 | 0.66 | 0.73 | 0.056 | 0.067 | 0.27 | 0.34 | 0.041 | 0.14 | 0.0045 | — | — | — | — | — | — | | 0.026 |
| A16 | | 0.39 | 0.64 | 0.79 | 0.055 | 0.044 | 0.24 | 0.32 | 0.038 | — | 0.0059 | — | — | — | — | — | — | | 0.018 |
| A17 | | 0.36 | 0.61 | 0.64 | 0.047 | 0.053 | 0.24 | 0.32 | 0.043 | — | 0.0042 | 0.004 | — | — | 0.001 | — | — | | 0.029 |
| A18 | | 0.38 | 0.78 | 0.89 | 0.063 | 0.046 | 0.25 | 0.30 | 0.037 | — | 0.0045 | — | 0.003 | 0.001 | — | 0.0003 | — | | 0.022 |
| A19 | | 0.34 | 0.71 | 0.78 | 0.073 | 0.058 | 0.28 | 0.33 | 0.033 | — | 0.0048 | — | 0.001 | — | 0.004 | — | — | | 0.017 |
| A20 | | 0.32 | 0.65 | 0.69 | 0.048 | 0.050 | 0.14 | 0.35 | 0.051 | — | 0.0040 | 0.048 | — | 0.005 | — | — | 0.02 | | 0.037 |
| A21 | | 0.37 | 0.66 | 0.75 | 0.044 | 0.067 | 0.18 | 0.34 | 0.036 | 0.04 | 0.0037 | — | — | — | — | 0.0045 | — | | 0.023 |
| A22 | | 0.39 | 0.71 | 0.74 | 0.060 | 0.041 | 0.23 | 0.32 | 0.042 | — | 0.0042 | — | — | — | — | — | 0.47 | | 0.028 |
| A23 | | 0.36 | 0.70 | 0.81 | 0.058 | 0.058 | 0.22 | 0.32 | 0.035 | — | 0.0013 | — | — | — | — | — | — | | 0.031 |
| A24 | | 0.34 | 0.73 | 0.83 | 0.043 | 0.062 | 0.18 | 0.34 | 0.029 | — | 0.0059 | — | — | — | — | — | — | | 0.009 |
| A25 | | 0.35 | 0.69 | 0.79 | 0.051 | 0.055 | 0.19 | 0.31 | 0.036 | — | 0.0043 | — | — | — | — | — | — | Nb:0.01 | 0.021 |
| A26 | | 0.35 | 0.67 | 0.78 | 0.042 | 0.059 | 0.21 | 0.30 | 0.033 | — | 0.0052 | — | — | — | — | — | — | Cu:0.02 | 0.015 |

| A27 | | 0.34 | 0.72 | 0.88 | 0.054 | 0.063 | 0.23 | 0.33 | 0.036 | — | 0.0047 | — | — | — | — | — | — | Ni:0.04 | 0.020 |
|-----|--|------|------|------|-------|-------|------|------|-------|---|--------|---|---|---|---|---|---|---------|-------|
| A28 | | 0.35 | 0.73 | 0.73 | 0.052 | 0.057 | 0.20 | 0.34 | 0.012 | — | 0.0026 | — | — | — | — | — | — | | 0.003 |
| A29 | | 0.36 | 0.75 | 0.77 | 0.047 | 0.063 | 0.19 | 0.34 | 0.023 | — | 0.0058 | — | — | — | — | — | — | | 0.003 |
| A30 | | 0.37 | 0.77 | 0.81 | 0.049 | 0.064 | 0.17 | 0.30 | 0.051 | — | 0.0013 | — | — | — | — | — | — | | 0.047 |
| A31 | | 0.34 | 0.81 | 0.80 | 0.053 | 0.057 | 0.21 | 0.31 | 0.068 | — | 0.0057 | — | — | — | — | — | — | | 0.049 |
| A32 | | 0.36 | 0.67 | 0.66 | 0.062 | 0.052 | 0.24 | 0.30 | 0.039 | — | 0.0048 | 0.060 | — | — | — | — | — | | 0.023 |
| A33 | | 0.35 | 0.63 | 0.65 | 0.054 | 0.046 | 0.21 | 0.31 | 0.043 | — | 0.0042 | 0.190 | — | — | — | — | — | | 0.029 |
| A34 | | 0.42 | 0.75 | 0.81 | 0.062 | 0.055 | 0.24 | 0.33 | 0.039 | — | 0.0042 | 0.130 | 0.002 | 0.002 | — | — | — | | 0.025 |

[Table 1-2]

| Test No. | Type | Chemical composition (mass%) Balance: Fe and impurities | | | | | | | | | | | | | | | | | Ti-3.4N |
|---|---|---|---|---|---|---|---|---|---|---|---|---|---|---|---|---|---|---|---|
| | | C | Si | Mn | P | S | Cr | V | Ti | Mo | N | Al | Ca | Zr | Mg | Bi | Pb | | |
| B1 | Comparative Examples | 0.24 | 0.72 | 0.78 | 0.051 | 0.055 | 0.19 | 0.31 | 0.034 | — | 0.0043 | — | — | — | — | — | — | | 0.019 |
| B2 | | 0.57 | 0.68 | 0.82 | 0.067 | 0.064 | 0.12 | 0.33 | 0.043 | — | 0.0048 | — | — | — | — | — | — | | 0.027 |
| B3 | | 0.39 | 0.18 | 0.66 | 0.049 | 0.061 | 0.24 | 0.32 | 0.039 | — | 0.0039 | — | — | — | — | — | — | | 0.026 |
| B4 | | 0.36 | 1.32 | 0.80 | 0.058 | 0.055 | 0.27 | 0.32 | 0.040 | — | 0.0043 | — | — | — | — | — | — | | 0.025 |
| B5 | | 0.40 | 0.59 | 0.49 | 0.064 | 0.049 | 0.14 | 0.35 | 0.032 | — | 0.0040 | 0.003 | 0.002 | — | — | — | — | | 0.018 |
| B6 | | 0.38 | 0.63 | 1.53 | 0.053 | 0.068 | 0.19 | 0.34 | 0.044 | — | 0.0037 | — | — | — | — | — | — | | 0.031 |
| B7 | | 0.34 | 0.72 | 0.74 | 0.008 | 0.062 | 0.28 | 0.32 | 0.034 | — | 0.0039 | — | — | — | — | — | — | | 0.021 |
| B8 | | 0.34 | 0.74 | 0.69 | 0.205 | 0.057 | 0.12 | 0.35 | 0.039 | — | 0.0047 | — | — | 0.002 | 0.001 | — | — | | 0.023 |
| B9 | | 0.38 | 0.69 | 0.84 | 0.047 | 0.009 | 0.15 | 0.31 | 0.042 | — | 0.0045 | — | — | — | — | — | — | | 0.027 |
| B10 | | 0.40 | 0.62 | 0.70 | 0.059 | 0.103 | 0.17 | 0.32 | 0.044 | — | 0.0044 | — | — | — | 0.003 | — | — | | 0.029 |
| B11 | | 0.39 | 0.78 | 0.77 | 0.050 | 0.060 | 1.22 | 0.30 | 0.032 | — | 0.0043 | — | — | — | — | — | — | | 0.017 |
| B12 | | 0.37 | 0.74 | 0.68 | 0.064 | 0.042 | 0.27 | 0.23 | 0.049 | — | 0.0040 | — | — | — | — | 0.0006 | — | | 0.035 |
| B13 | | 0.38 | 0.76 | 0.62 | 0.073 | 0.057 | 0.21 | 0.42 | 0.041 | — | 0.0038 | — | — | — | — | — | — | | 0.028 |
| B14 | | 0.35 | 0.63 | 0.87 | 0.057 | 0.057 | 0.18 | 0.31 | 0.008 | — | 0.0046 | — | — | — | — | — | — | | -0.008 |
| B15 | | 0.38 | 0.61 | 0.85 | 0.069 | 0.048 | 0.17 | 0.32 | 0.120 | — | 0.0041 | — | — | — | — | — | 0.14 | | 0.106 |
| B16 | | 0.41 | 0.70 | 0.84 | 0.060 | 0.064 | 0.28 | 0.30 | 0.040 | 0.18 | 0.0045 | — | — | — | — | — | — | | 0.025 |
| B17 | | 0.37 | 0.74 | 0.82 | 0.054 | 0.055 | 0.22 | 0.33 | 0.037 | — | 0.0009 | — | — | — | — | — | — | | 0.034 |
| B18 | | 0.42 | 0.73 | 0.72 | 0.054 | 0.054 | 0.24 | 0.35 | 0.040 | — | 0.0064 | — | — | — | — | — | — | | 0.018 |
| B19 | | 0.38 | 0.76 | 0.78 | 0.057 | 0.052 | 0.21 | 0.32 | 0.012 | — | 0.0031 | — | — | — | — | — | — | | 0.001 |
| B20 | | 0.36 | 0.73 | 0.81 | 0.061 | 0.057 | 0.18 | 0.30 | 0.018 | — | 0.0055 | — | — | — | — | — | — | | -0.001 |
| B21 | | 0.41 | 0.68 | 0.79 | 0.055 | 0.063 | 0.16 | 0.32 | 0.056 | — | 0.0013 | — | — | — | — | — | — | | 0.052 |
| B22 | | 0.43 | 0.66 | 0.83 | 0.057 | 0.062 | 0.14 | 0.33 | 0.068 | — | 0.0048 | — | — | — | — | — | — | | 0.052 |

[Table 2-1]

| Test No. | Type | Tensile strength (MPa) | 0.2% proof stress (MPa) | Yield ratio | Microstructure | Amount of ferrite-pearlite Volume% | Amount of fractured surface deformation in X direction (μm) | Amount of fractured surface deformation in Y direction (μm) | Fracture splittability | Fittability of fractured surfaces |
|---|---|---|---|---|---|---|---|---|---|---|
| A1 | | 1010 | 932 | 0.92 | F/P | 100 | 27 | 16 | GOOD | GOOD |
| A2 | | 1253 | 1093 | 0.87 | F/P | 100 | 12 | 10 | GOOD | GOOD |
| A3 | | 1019 | 923 | 0.91 | F/P | 100 | 26 | 21 | GOOD | GOOD |
| A4 | | 1157 | 1062 | 0.92 | F/P | 100 | 11 | 11 | GOOD | GOOD |
| A5 | | 1070 | 973 | 0.91 | F/P | 100 | 27 | 18 | GOOD | GOOD |
| A6 | | 1176 | 1077 | 0.92 | F/P/B | 96 | 13 | 10 | GOOD | GOOD |
| A7 | | 1146 | 1037 | 0.90 | F/P | 100 | 27 | 24 | GOOD | GOOD |
| A8 | | 1122 | 1024 | 0.91 | F/P | 100 | 24 | 18 | GOOD | GOOD |
| A9 | | 1195 | 1103 | 0.92 | F/P | 100 | 26 | 23 | GOOD | GOOD |
| A10 | | 1121 | 1034 | 0.92 | F/P | 100 | 24 | 22 | GOOD | GOOD |
| A11 | | 1136 | 1038 | 0.91 | F/P | 100 | 29 | 24 | GOOD | GOOD |
| A12 | | 1187 | 1078 | 0.91 | F/P/B | 97 | 23 | 20 | GOOD | GOOD |
| A13 | | 1016 | 873 | 0.86 | F/P | 100 | 24 | 19 | GOOD | GOOD |
| A14 | | 1148 | 1075 | 0.94 | F/P | 100 | 12 | 13 | GOOD | GOOD |
| A15 | Inventive Examples | 1177 | 1066 | 0.91 | F/P/B | 97 | 12 | 14 | GOOD | GOOD |
| A16 | | 1150 | 1034 | 0.90 | F/P | 100 | 26 | 23 | GOOD | GOOD |
| A17 | | 1063 | 957 | 0.90 | F/P | 100 | 29 | 19 | GOOD | GOOD |
| A18 | | 1178 | 1098 | 0.93 | F/P | 100 | 24 | 20 | GOOD | GOOD |
| A19 | | 1131 | 1028 | 0.91 | F/P | 100 | 26 | 24 | GOOD | GOOD |
| A20 | | 1062 | 963 | 0.91 | F/P | 100 | 28 | 23 | GOOD | GOOD |
| A21 | | 1132 | 1039 | 0.92 | F/P | 100 | 19 | 22 | GOOD | GOOD |
| A22 | | 1157 | 1067 | 0.92 | F/P | 100 | 27 | 16 | GOOD | GOOD |
| A23 | | 1130 | 1045 | 0.92 | F/P | 100 | 18 | 11 | GOOD | GOOD |
| A24 | | 1153 | 1061 | 0.92 | F/P | 100 | 22 | 16 | GOOD | GOOD |
| A25 | | 1165 | 1072 | 0.92 | F/P | 100 | 24 | 20 | GOOD | GOOD |
| A26 | | 1142 | 1039 | 0.91 | F/P | 100 | 20 | 16 | GOOD | GOOD |
| A27 | | 1124 | 1024 | 0.91 | F/P | 100 | 19 | 17 | GOOD | GOOD |
| A28 | | 1144 | 1042 | 0.91 | F/P | 100 | 23 | 22 | GOOD | GOOD |
| A29 | | 1137 | 1051 | 0.92 | F/P | 100 | 25 | 18 | GOOD | GOOD |
| A30 | | 1168 | 1069 | 0.92 | F/P | 100 | 18 | 19 | GOOD | GOOD |
| A31 | | 1153 | 1056 | 0.92 | F/P | 100 | 21 | 24 | GOOD | GOOD |
| A32 | | 1138 | 1035 | 0.91 | F/P | 100 | 29 | 23 | GOOD | GOOD |
| A33 | | 1112 | 1026 | 0.92 | F/P | 100 | 13 | 12 | GOOD | GOOD |
| A34 | | 1166 | 1094 | 0.94 | F/P | 100 | 26 | 21 | GOOD | GOOD |

[Table 2-2]

| Test No. | Type | Tensile strength (MPa) | 0.2% proof stress (MPa) | Yield ratio | Microstructure | Amount of ferrite-pearlite Volume% | Amount of fractured surface deformation in X direction (μm) | Amount of fractured surface deformation in Y direction (μm) | Fracture splittability | Fittability of fractured surfaces |
|---|---|---|---|---|---|---|---|---|---|---|
| B1 | | 990 | 798 | 0.81 | F/P | 100 | 56 | 34 | GOOD | GOOD |
| B2 | | 1307 | 1098 | 0.84 | F/P | 100 | 92 | 63 | BAD | BAD |
| B3 | | 1030 | 842 | 0.82 | F/P | 100 | 88 | 47 | BAD | BAD |
| B4 | | 1134 | 984 | 0.87 | F/P | 100 | -5 | 8 | GOOD | BAD |
| B5 | | 1057 | 840 | 0.79 | F/P | 100 | 48 | 36 | GOOD | GOOD |
| B6 | | 1147 | 812 | 0.71 | F/P/B | 94 | 112 | 93 | BAD | BAD |
| B7 | | 1021 | 839 | 0.82 | F/P | 100 | 93 | 42 | BAD | BAD |
| B8 | | 1128 | 961 | 0.85 | F/P | 100 | 9 | 8 | GOOD | BAD |
| B9 | Comparative Examples | 1097 | 951 | 0.87 | F/P | 100 | 1 | 9 | GOOD | BAD |
| B10 | | 1037 | 826 | 0.80 | F/P | 100 | 122 | 71 | BAD | BAD |
| B11 | | 1108 | 793 | 0.72 | F/P/B | 93 | 135 | 108 | BAD | BAD |
| B12 | | 1033 | 842 | 0.82 | F/P | 100 | 43 | 33 | GOOD | GOOD |
| B13 | | 1175 | 1094 | 0.93 | F/P | 100 | -28 | 5 | GOOD | BAD |
| B14 | | 1023 | 848 | 0.83 | F/P | 100 | 56 | 40 | GOOD | GOOD |
| B15 | | 764 | — | — | F/P | 100 | -35 | 4 | GOOD | BAD |
| B16 | | 1128 | 813 | 0.72 | F/P/B | 93 | 124 | 85 | BAD | BAD |
| B17 | | 1078 | 764 | 0.71 | F/P/B | 92 | 109 | 70 | BAD | BAD |
| B18 | | 1052 | 838 | 0.80 | F/P | 100 | 63 | 48 | GOOD | GOOD |
| B19 | | 1043 | 823 | 0.79 | F/P | 100 | 46 | 28 | GOOD | GOOD |
| B20 | | 1060 | 847 | 0.80 | F/P | 100 | 42 | 33 | GOOD | GOOD |
| B21 | | 1054 | 836 | 0.79 | F/P | 100 | 7 | 9 | GOOD | BAD |
| B22 | | 1062 | 845 | 0.80 | F/P | 100 | 8 | 5 | GOOD | BAD |

In Table 1-1, all of steels No. A1 to A34 of examples of the present invention have the chemical composition falling in the range prescribed in the present invention. In each of these Examples A1 to A34 of the present invention, an alloy carbide such as a V carbide was precipitated finely and in a large amount between pearlite lamellas in addition to pro-eutectoid ferrite. Therefore, as shown in Table 2-1, Examples A1 to A34 of the present invention had a tensile strength 1000 MPa or more, and a yield ratio of 0.85 or more. Besides, Examples A1 to A34 of the present invention had 0.2% proof stress of 850 MPa or more. Furthermore, Examples A1 to A34 of the present invention were good in the fracture splittability, and good also in the fittability of fractured surfaces. When Examples A1 to A34 of the present invention are formed into non-heat-treated steel components, non-heat-treated steel components having high tensile strength and yield ratio, having excellent 0.2% proof stress, and further having excellent fracture splittability and fittability of fractured surfaces are obtained.

On the contrary, as shown in Table 1-2 and Table 2-2, in Comparative Example B1, the C content was low, and hence necessary tensile strength could not be obtained and the 0.2% proof stress was not adequate.

In Comparative Example B2, the C content was high, and hence adequate tensile strength was obtained but the yield ratio was as low as less than 0.85, and a long secondary crack was caused, and hence the fracture splittability and the fittability of fractured surfaces were poor.

In Comparative Examples B3 and B7, the Si and P contents were low, and hence the reduction of the ductility and the toughness was inadequate, the yield ratio was low and the amount of plastic deformation was large. Therefore, in Comparative Examples B3 and B7, the fracture splittability and the fittability of fractured surfaces were poor.

In Comparative Examples B4, B8 and B13, the Si, P and V contents were high, and hence adequate strength was obtained and the fracture splittability was good, but irregularities on fractured surfaces were so small that misalignment was caused at the time of assembly, and the fittability of fractured surfaces was poor.

In Comparative Example B5, the Mn content was so low that the growth rate of pearlite was high, and an alloy carbide such as a V carbide was not precipitated between pearlite lamellas. Therefore, in Comparative Example B5, the yield ratio was low, and the 0.2% proof stress was lowered.

In Comparative Examples B6, B11 and B16, the Mn, Cr and Mo contents were high, and in Comparative Example B17, the N content was low, and hence a structure excluding the ferrite-pearlite structure, namely, the bainite structure, was generated. Therefore, in Comparative Examples B6, B11, B16 and B17, the yield ratio was low and adequate 0.2% proof stress could not be obtained. Besides, in Comparative Examples B6, B11, B16 and B17, the fracture splittability and the fittability of fractured surfaces were poor.

In Comparative Example B9, the S content was low, and adequate tensile strength and yield ratio were obtained and the fracture splittability was good, but irregularities on fractured surfaces were so small that misalignment was caused at the time of assembly, and the fittability of the fractured surfaces was poor.

In Comparative Example B10, the S content was high, and hence the reduction of the ductility and the toughness was inadequate, the yield ratio was low and the amount of plastic deformation was large. Therefore, in Comparative Example 10, the fracture splittability and the fittability of fractured surfaces were poor.

In Comparative Examples B12 and B14, the V and Ti contents were low, and hence the yield ratio was low and the 0.2% proof stress was lowered.

In Comparative Example B15, the Ti content was high, and hence plastic deformation was not caused but fracture at low stress was caused, and the tensile strength was inadequate.

In Comparative Example B18, the N content was high, and hence the nitride was increased, and the precipitation amount of an alloy carbide such as a V carbide generated at the time of the cooling performed after the hot forging was reduced, and therefore, the yield ratio was low, and the 0.2% proof stress was also lowered.

In Comparative Examples B19 and B20, alloy elements were within the range of the present invention, but Ti - 3.4 × N was insufficient, and hence the yield ratio was poor.

In Comparative Examples B21 and B22, alloy elements were within the range of the present invention, but Ti - 3.4 × N was excessive, and hence a Mn sulfide was insufficient, and the fittability of fractured surfaces was poor.

Brief Description of the Reference Symbols

1 ... connecting rod (non-heat-treated steel component), 2 ... upper half body, 2A ... semicircular arc portion, 2B ... rod portion, 2a ... abutting surface, 3 ... lower half body, 3A ... semicircular arc portion, 3a ... abutting surface, 5 ... screw hole, 6 ... through hole, 7 ... connecting bolt, 8 ... big end part, 9 ... small end part

**Claims**

1. A steel having a chemical composition containing, by unit mass%:

   C: 0.25 to 0.55%,
   Si: 0.20 to 1.30%,
   Mn: 0.50 to 1.50%,
   P: 0.010 to 0.200%,
   S: 0.010 to 0.100%,
   Cr: 0 to 1.20%,
   V: 0.25 to 0.40%,
   Ti: 0.010 to 0.070%,
   Mo: 0 to 0.15%,
   N: 0.0010 to 0.0060%,
   Al: 0 to 0.200%,
   Ca: 0 to 0.005%,
   Zr: 0 to 0.005%,
   Mg: 0 to 0.005%,
   Bi: 0 to 0.0050%,
   Pb: 0 to 0.50%,
   Nb: 0 to 0.05%,

Cu: 0 to 0.05%, and
Ni: 0 to 0.05%,

with the balance being Fe and impurities,
wherein a Ti content and a N content satisfy the following expression 1:

$$0.002 < Ti - 3.4 \times N < 0.050 \quad \text{(Expression 1)}$$

2. The steel according to claim 1, wherein the chemical composition contains, by unit mass%,
Mo: 0.005 to 0.15%.

3. The steel according to claim 1 or 2, wherein the chemical composition contains, by unit mass%, one or more selected from the group consisting of:

Al: 0.001 to 0.200%,
Ca: 0.001 to 0.005%
Zr: 0.001 to 0.005%,
Mg: 0.001 to 0.005%,
Bi: 0.0001 to 0.0050%,
Pb: 0.01 to 0.50%,
Nb: 0.01 to 0.05%,
Cu: 0.01 to 0.05%, and
Ni: 0.01 to 0.05%.

4. The steel according to any one of claims 1 to 3, wherein the chemical composition contains, by unit mass%,
Al: 0 to 0.050%.

5. The steel according to any one of claims 1 to 4, wherein the chemical composition contains, by unit mass%,
Al: more than 0.050% and 0.200% or less.

6. A machine component comprising a steel having a chemical composition containing, by unit mass%:

C: 0.25 to 0.55%,
Si: 0.20 to 1.30%,
Mn: 0.50 to 1.50%,
P: 0.010 to 0.200%,
S: 0.010 to 0.100%,
Cr: 0 to 1.20%,
V: 0.25 to 0.40%,
Ti: 0.010 to 0.070%,
Mo: 0 to 0.15%,
N: 0.0010 to 0.0060%,
Al: 0 to 0.200%,
Ca: 0 to 0.005%,
Zr: 0 to 0.005%,
Mg: 0 to 0.005%,
Bi: 0 to 0.0050%,
Pb: 0 to 0.50%,
Nb: 0 to 0.05%,
Cu: 0 to 0.05%, and
Ni: 0 to 0.05%,

with the balance being Fe and impurities,
wherein an area fraction of a ferrite-pearlite structure in a microstructure disposed inward from a surface by 1.0 mm or more is 95% or more, and
a Ti content and a N content satisfy the following expression 2:

$$0.002 < \text{Ti} - 3.4 \times \text{N} < 0.050 \quad \text{(Expression 2)}$$

7. The machine component according to claim 6, having a tensile strength of 1000 MPa or more and a yield ratio of 0.85 or more.

8. A connecting rod comprising a steel having a chemical composition containing, by unit mass%:

C: 0.25 to 0.55%,
Si: 0.20 to 1.30%,
Mn: 0.50 to 1.50%,
P: 0.010 to 0.200%,
S: 0.010 to 0.100%,
Cr: 0 to 1.20%,
V: 0.25 to 0.40%,
Ti: 0.010 to 0.070%,
Mo: 0 to 0.15%,
N: 0.0010 to 0.0060%,
Al: 0 to 0.200%,
Ca: 0 to 0.005%,
Zr: 0 to 0.005%,
Mg: 0 to 0.005%,
Bi: 0 to 0.0050%,
Pb: 0 to 0.50%,
Nb: 0 to 0.05%,
Cu: 0 to 0.05%, and
Ni: 0 to 0.05%,

with the balance being Fe and impurities,
wherein an area fraction of a ferrite-pearlite structure in a microstructure disposed inward from a surface by 1.0 mm or more in a rod portion is 95% or more, and
a Ti content and a N content satisfy the following expression 3:

$$0.002 < \text{Ti} - 3.4 \times \text{N} < 0.050 \quad \text{(Expression 3)}$$

9. The connecting rod according to claim 8, wherein the rod portion has a tensile strength of 1000 MPa or more and a yield ratio of 0.85 or more.

# FIG. 1

# FIG. 2

FIG. 3

## FIG. 4

(a)

(b)

FIG. 5

## INTERNATIONAL SEARCH REPORT

| | International application No. |
|---|---|
| | PCT/JP2019/016832 |

**A. CLASSIFICATION OF SUBJECT MATTER**
Int.Cl. C22C38/00(2006.01)i, C22C38/60(2006.01)i, F16C7/02(2006.01)i

According to International Patent Classification (IPC) or to both national classification and IPC

**B. FIELDS SEARCHED**

Minimum documentation searched (classification system followed by classification symbols)
Int.Cl. C22C38/00-38/60, F16C7/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-208397 A (KOBE STEEL, LTD.) 11 September | 1-5 |
| A | 2008, claims, paragraph [0030] (Family: none) | 6-9 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 July 2019 (18.07.2019) | 30 July 2019 (30.07.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/016832

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | WO 2009/107282 A1 (NIPPON STEEL CORP.) 03 September 2009, claims, page 15, lines 21-26, page 22, lines 8-12, tables 1, 2 & US 2010/0143180 A1, claims, paragraphs [0060], [0072], tables 1, 2 & EP 2246451 A1 & CA 2681788 A1 & KR 10-2009-0109548 A & CN 101652493 A & RU 2431694 C2 & TW 200936784 A | 1-4, 6, 8<br>5, 7, 9 |
| X<br>A | WO 2017/110910 A1 (NIPPON STEEL & SUMITOMO METAL CORPORATION) 29 June 2017, claims, paragraph [0013], tables 1, 2 & US 2018/0305798 A1, claims, paragraph [0025], tables 1, 2 & EP 3396002 A1 | 1, 3-4, 6, 8<br>2, 5, 7, 9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018081536 A
- JP 3637375 B
- JP 3756307 B
- JP 3355132 B
- JP 3988661 B
- JP 5340290 B
- JP 4314851 B
- JP 3671688 B
- JP 4268194 B
- WO 2016143812 A